# EUROPÄISCHE PATENTSCHRIFT

(11) **EP 1 633 608 B1**
(45) Veröffentlichungstag und Bekanntmachung des Hinweises auf die Patenterteilung: **29.11.2006**
(21) Anmeldenummer: 04733769.6
(22) Anmeldetag: 19.05.2004
(51) Int. Cl.: B60R 21/34, B60R 21/01, G06K 9/64

(54) **FUSSGÄNGERSCHUTZSYSTEM FÜR KRAFTFAHRZEUGE**
PEDESTRIAN PROTECTION SYSTEM FOR MOTOR VEHICLES
SYSTEME DE PROTECTION DES PIETONS DESTINE A DES VEHICULES

(30) Priorität: 13.06.2003 DE 10327115
(43) Veröffentlichungstag der Anmeldung: 15.03.2006
(73) Patentinhaber: REHAU AG + Co, 95111 Rehau (DE)
(72) Erfinder: STEEG, Claus-Christian, 08606 Oelsnitz (DE)
(86) Internationale Anmeldenummer: PCT/EP2004/005387
(87) Internationale Veröffentlichungsnummer: WO 2004/110828

(56) Entgegenhaltungen:
- DE-A- 10 025 678
- DE-A- 10 100 880
- DE-A- 19 831 413
- DE-U- 20 013 385
- US-A1- 2002 093 180
- HOFFMANN, J., KRETZSCHMAR, A.: "Aktiv-reversible Schutzkonzepte zur Erfüllung der Fussgängerschutzanforderungen nach EEVC WG 17" VDI-KONGRESS "INNOVATIVER KFZ-INSASSEN UND PARTNERSCHUTZ, [Online] September 2001 (2001-09), Seiten 1-18, XP002291826 Berlin, DE Gefunden im Internet: <URL:http://www.siemens-restraint-systems. de/de/xt_download/41_Vortrag_VDI_Tagung__2 001_Fussgarger.pdf> [gefunden am 2004-08-09]
- FRANKE, U.; GAVRILA, D.; GÖRZIG, S.; LINDNER, F.; PAETZOLD, F.;WÖHLER, C.: "Autonomous Driving approaches Downtown" IEEE INTELLIGENT SYSTEMS, [Online] Bd. 13, Nr. 6, November 1998 (1998-11), XP002291827 Gefunden im Internet: <URL:http://www.christian-woehler.de/intsy s99.pdf> [gefunden am 2004-08-09]
- MILCH, S.; BEHRENS, M.: "Pedestrian Detection with Radar and Computer Vision" PROCEEDINGS OF THE SYMPOSIUM ON PROGRES IN AUTOMOBILE LIGHTING, 25. - 26. September 2001, Seiten 657-663, XP002291828 Technische Universität Darmstadt ISBN: 3-89675-971-X

## Beschreibung

Die Erfindung betrifft ein Fußgängerschutzsystem für Kraftfahrzeuge.

In der Europäischen Union sterben jährlich ca. 7000 Fußgänger bei Verkehrsunfällen mit Kraftfahrzeugen und dies entspricht ca. einem Anteil von 20% aller bei Verkehrsunfällen getöteten Verkehrsteilnehmern. Beim Kraftfahrzeug-Fußgängerunfall werden daher Ursachen- und Wirkungsmechanismen zur Abschätzung des Verletzungsrisikos seit vielen Jahren analysiert, wobei der Fahrzeugfront im Bereich der Kontaktstellen eine besondere Bedeutung zukommt. Dabei zeigte sich, dass die Kraftfahrzeug-Fußgänger-Relativgeschwindigkeit , die geometrische Auslegung der Kraftfahrzeugfront und deren Materialsteifigkeit den größten Einfluss auf die Verletzungsschwere eines Fußgängers besitzen. Häufig sind insbesondere Kopfverletzungen durch den Fußgängeraufschlag auf die Motorhaube, die Kotflügelbänke, die A-Säule und/oder Windschutzscheibe. Da der Motorraumbereich der Kraftfahrzeuge durch Aggregate und steife Bauteile verbaut ist, bleibt derzeit nur ein geringer Freiraum/Deformationsweg zwischen Frontmodul und den Motorraumeinbauteilen. Aus Studien und Simulationen (siehe Artikel: The EEVC WG 10 head impact test procedure in practical use; Proceedings of the 14^{th} International Technical Conference on the Enhanced Safety of Vehicles (ESV); Paper 94-S7-O-03; Munich; 1994) wurde ein notwendiger Wert von 50-70 mm als Deformationsweg bei Fußgängerauftreffrelativgeschwindigkeiten von 40 km/h bestimmt, so dass ein HIC-Wert von unter 1000 für einen Erwachsenenprüfkopf erreicht werden kann.
Wesentlich i.d.Z. ist auch die zeitliche Abfolge des Fußgängeraufprallgeschehens. Da die meisten Kraftfahrzeug-Fußgänger-Unfälle im Geschwindigkeitsbereich von 5 km/h bis zu 60 km/h stattfinden, erfolgt ein typischer Kopfaufprall auf der Fahrzeugfront ca. 140 bis 150 ms nach dem erstem Kontakt zwischen Fußgängerbein und Stoßfänger, wobei für Kinder dieses Zeitfenster kürzer ist und im Bereich von 60 bis 90 ms liegt.

Das European Enhanced Vehicle Safety Committee legte daher einheitliche Testmethoden zum fahrzeugseitigen Fußgängerschutz zugrunde, die Simulationen der Aufprallvorgänge und -abläufe zwischen Fußgänger und Kraftfahrzeug umfassen (siehe EEVC WG 17 Report - Improved test methods to evaluate pedestrian protection afforded by passenger cars; European Enhanced Vehicle Safety Committee; 1998).
Eine Verbesserung hinsichtlich Fußgängerschutz der Kraftfahrzeugfront ist bis heute nur eingeschränkt erreicht worden. So sind z.B. neuartige Stoßfängersysteme, bestehend aus verschiedenen Kunststoffen oder Motorhauben mit neuen Materialien und geänderter Struktur aufgebaut und getestet worden. Diese passiven Sicherheitsmaßnahmen, die konstruktiv zu einer Vergrößerung des Deformationsweges im Falle des Aufpra!!s eines Fußgängers führen, beeinflussen durch die Auslegung zum einen die Frontgeometrie und andererseits das Kraftstoffverbrauchsverhalten des Kraftfahrzeuges nachhaltig.

Aus dem Stand der Technik sind verschiedenartige Fußgängerschutzsysteme für Kraftfahrzeuge bekannt und werden zurzeit eingesetzt bzw. erprobt. Die verwendeten Fußgängerschutzsysteme weisen ein konstruktiv bedingtes unterschiedliches Schutzverhalten und -vermögen auf. Vorgeschlagen wird bspw. eine Fußgängerschutzvorrichtung, die in der DE 100 59 203 A1 beschrieben ist und eine am Kraftfahrzeugfrontmodul angeordnete Airbaganordnung umfasst, wobei die Airbaganordnung in der Fronthaube und/oder im Stoßfänger integriert ist, so dass im aktivierten Zustand ein Aufblasvolumen der Airbags geschaffen wird, welches den Aufprallbereich am Kraftfahrzeugfrontmodul teilweise oder vollflächig zum Schutz des Fußgängers abdeckt. Zur Abdeckung des Kraftfahrzeugfrontbereich wird jedoch eine Vielzahl von Airbagvorrichtungen benötigt, die platzsparend eingebaut werden müssen.

In der DE 100 20 658 A1 ist eine crashaktive Fahrzeugfrontstruktur beschrieben, die mittels einer Sensorvorrichtung - noch vor der Kollision mit einem Fußgänger oder dergleichen - die Fahrzeugfrontstruktur verfährt und zum Schutz ein Airbagmodul auslöst, wobei sich der Airbag über die Fahrzeugfrontstruktur abdeckend erstreckt und den durch das Verfahren der Kraftfahrzeugfrontstruktur geschaffenen Zwischenraum im Kollisionsfall schützt.

Durch den Verfahrweg der Frontstruktur in Kollisionsrichtung mass jedoch die zu bewegende Masse und Anordnung durch zusätzlich bewegliche im Fahrzeugfrontbereich unterzubringende Vorrichtungen erfolgen, die unter dem Gesichtspunkt einer generellen Gewichtseinsparung im Kraftfahrzeugbau, nur aufwendig zu realisieren sind, so dass die Sicherheitsmerkmale im Kollisionsfall durch ein höheres Kraftfahrzeuggewicht verbunden mit einer aufwändigen Verfahranordnung der Frontkonstruktion gewährleistet werden.

In der DE 198 02 841 A1 ist eine Kraftfahrzeugstoßstangenanordnung offenbart, die Prallfänger mit Puffer vorsieht, die während eines Fußgängeraufpralls auf der Kraftfahrzeugvorderfront eine mechanische Vorrichtung auslöst, die einen oberen Prallkörper nach hinten verschiebt und einen mit diesem verbundenen unteren Prallkörper entsprechend in Fahrtrichtung bewegt. Die dazu vorgesehene Vorrichtung führt somit zu einer Führung des aufprallenden Fußgängers entlang der Fahrzeugfrontlinie, wodurch der Fußgänger im Kollisionsfall auf die Fronthaube des Kraftfahrzeuges hin bewegt werden soll. Damit wird der Verletzungsgrad eines durch den Frontbereich eines Kraftfahrzeuges erfassten Fußgängers im Oberschenkel- und Unterschenkelbereich reduziert. Die Verlagerung der Kraftfahrzeugfrontstruktur erfolgt jedoch nur während des Aufprallgeschehens des Fußgängers und wird durch den oberen Pralldämpfer ausgelöst. Da hierzu mechanisch verschwenkbar gelagerte Hebelanordnungen zwischen den Pralldämpfern verwendet werden, ist das zeitliche Ansprechverhalten der Fußgängerschutzanordnung durch die hydraulischen und pneumatischen Verbindungselemente bestimmt. Statistisch gesehen erfolgt in einer Unfallsituation der Zusammenstoß Fahrzeug - Fußgänger innerhalb kürzester Zeitfolge bei mittleren Relativgeschwindigkeiten im Bereich von 5 bis 60 km/h, so dass diese vorgeschlagene Anordnung nicht in jedem Fall den oberen bzw. unteren Prallfänger unter den kinematischen Aufprallbedingungen während des Unfallgeschehens so verfahren kann, dass die Endstellung der Stoßstangenanordnung eine Führung des aufprallenden Fußgängers auf die Fronthaube gewährleistet (siehe hierzu Artikel von A. Berg; J. Dettinger; J. Grandel "Personenkraftwagen/Fußgänger-Unfälle - Erkenntnisse aus neueren Untersuchungen und Crash-Tests mit besonderer Berücksichtigung moderner Kompaktfahrzeuge"; in Verkehrsunfall und Fahrzeugtechnik; Heft 9/1997).

Aus der DE 199 24 617 A1 geht eine Schutzvorrichtung hervor, die aus einem Gasgenerator mit Schäumungsmittel besteht. In vorgesehene Deformationskammern einer Energieabsorptionsvorrichtung wird ein Schäumungsmittel durch einen Sensor gesteuert unter Druck eingeblasen, wodurch die Energieabsorbereinheit im Crashfall ausgeschäumt wird. Hierzu werden zur Ermittlung der crashbedingten Aufprallenergie so genannte Pre-Crashsensoren eingesetzt, die eine Schaumfüllabgabemenge für die Deformationskammern vorbestimmen und einen Gasgenerator aktivieren, der die Schaumfüllmenge durch Druckbeaufschlagung dosiert in die Deformationskammern einbringt. Je nach Aufprall- und Crashverhältnissen mit Fußgängern entstehen jedoch Situationen, die abhängig sind von dem Erkennungsvermögen der zum Einsatz kommenden Sensoren. Da diese Sensoren bspw. weder das Gewicht, noch die Größe eines Fußgängers ermitteln, ist die Schaumfüllmenge für die Deformationskammern zur Energieabsorption der Aufprall-energie nicht dahingehend bestimmt.

Weiterhin ist aus der DE 41 13 031 A1 ein Stoßfängersystem mit einem in Stoßrichtung ausfahrbaren und federnd gelagerten Stoßfänger bekannt. Dabei wird der Stoßfänger während der Gefahrensituation um eine Weglänge Δs in Stoßrichtung ausgefahren und nach Beseitigung der Gefahrensituation auf ein geeignetes Maß selbsttätig zurückgefahren. Hierzu sind zylinderförmige Kolben vorgesehen, die mit einer Dämpfungsflüssigkeit befüllt sind und durch eine Steuereinrichtung in der Gefahrensituation den Stoßfänger in Fahrtrichtung des Fahrzeuges bewegen. In einer Weiterbildung werden vorgespannte Federspeicher für die Vorrichtung benannt, die ein schnelles Herausfahren des Stoßfängers in Fahrtrichtung des Fahrzeuges gestatten. Eine Aktions- und Ausfahrzeit beträgt jedoch bis zu einer Sekunde für eine Verfahrwegstrecke des Stoßfängersystems von ca. 20 cm während der Fahrzeug-Fußgänger-Kollisionsphase bei durchschnittlichen Kollisionsgeschwindigkeiten zwischen 5 bis 60 km/h. Dieses Zeitfenster ist für das Herausfahren des Stoßfängersystems zu groß bemessen, da bspw. ein Kopfaufprall auf die Motorhaube nach dem ersten Kontakt zwischen Fußgänger und Stoßfänger innerhalb einer Zeitspanne von 140 bis 160 ms für Erwachsene erfolgt und bei Kindern dieses Zeitfenster sich verkürzt auf 60 bis 90 ms.

Aus dem Stand der Technik sind darüber hinaus Maßnahmen zur Verbesserung des Fußgängerschutzes bekannt, die für die Konstruktion des Frontendmoduls ein rahmenartiges Deformationselement vorsehen. Diese großvolumige Konstruktion, die zu einem zusätzlichen Strömungswiderstand führt, widerspricht den zukünftigen Designforderungen, die an Fahrzeuge gestellt werden. Auch beabstandete Haltebügelanordnungen, wie in der US 4 406 489 beschrieben, die aus Kunststoff bestehend im Frontbereich des Kraftfahrzeuges montiert sind und für den Fußgängerschutz somit ein verformbares Frontendelement schaffen, beeinflussen das äußere Erscheinungsbild von Kraftfahrzeugen nachhaltig und lassen keine kompakte, integrierte Bauweise zukünftiger Kraftfahrzeuggenerationen zu.

Die US 2002/093180 A1, die den nächstkommenden Stand der Technik darstellt, umfasst ein Fußgängerschutzsystem für Fahrzeuge, insbesondere Kraftfahrzeuge, mit folgenden Merkmalen:
- Optische und/oder Radarstrahlabtastung einer zu überwachenden Fahr- / Vorausstrecke mit optischen und/oder Radarimpulsmessstrahlen einer Sendereinheit,
- Reflexion der optischen und/oder Radarimpulsmessstrahlen von einen Objekt, insbesondere Fußgänger zur Erzeugung von optischen und/oder Radar-Reflexionssignalen,
- Erfassen der optischen und/oder Radar-Reflexionssignale mittels einer in oder hinter dem Stoßfänger integrierten optischen und/oder Radar-Detektoreinheit zur Erzeugung einer Ausgangsinformation,
- Übertragung eines auswertbaren Signals an eine erste vorgesehene Neuro-Fuzzy-Datenbank,
- Erkennung von Objekten, insbesondere Fußgängern entlang der Fahr- / Vorausstrecke, wobei der von den Objekten, insbesondere Fußgängern reflektierte Messstrahl einer optischen und/oder Radar-Detektoreinheit zur Abstandsmessung und Signalerzeugung zugeführt wird und
- nach Identifikation der Fußgängerkontur durch die Mikroprozessor- und/oder Bildprozessoreinheit ein nachgeschalteter Prognoserechner die voraussichtliche Kollisionszeit aus der Abstandsmessung Kraftfahrzeug-Fußgänger und der Kraftfahrzeugzeuggeschwindigkeit ermittelt und
- die Prognoserechnereinheit ein elektronisches Signal via Bordnetzwerk an eine Aktoreneinheit sendet, wobei
- die Aktoreneinheit ein Rückstellelement auslöst.

Die aus dem Stand der Technik bekannten und beschriebenen Maßnahmen zur Optimierung des Fußgängerschutzes an Frontendmoduien von Kraftfahrzeugen basieren zusammenfassend auf energieabsorbierenden Elementen, die im Bereich der Fronthaube und/oder den zugehörigen Seitenteilen integriert sind und mit entsprechender Pre-Crash-Sensorik zur frühzeitigen Erkennung von Aufprallsituationen ausgestattet sind. Problematisch ist bisher noch die sensorische und zeitabhängige Auslegung hinsichtlich des Erkennens von Gefährdungssituationen und die damit einhergehende rechtzeitige Aktivierung einer Aufprallschutzvorrichtung. Weiterhin spielt das Kraftfahrzeugdesign in Verbindung mit der Sicherheitsauslegung von Frontendmodulen eine wesentliche Rolle, da Kunden Beeinträchtigungen im Fahrzeugdesign zugunsten von verbesserter Sicherheitsauslegung nicht generell akzeptieren.

Die zukünftigen technischen Anforderungen an Fußgängerschutzsysteme für Kraftfahrzeuge werden somit wesentlich durch die Faktoren:
- hohe und sichere Effizienz des Fußgängerschutzsystems im Schadensereignisfall,
- designoptimierte Auslegung des Frontendmoduls hinsichtlich Gewicht, Größe und Anordnung des Fußgängerschutzsystems,
- sicheres Auslösen des Fußgängerschutzsystems durch früherkennende/diagnostische Sensoren, die geschwindigkeits- und zeitabhängig das Fußgängerschutzsystem aktivieren,
- Montagefreundlichkeit beim Austausch/Ersatz nach dem Schadensereignis und
- geringe Kosten
bestimmt.

Vor diesem Hintergrund liegt der Erfindung die Aufgabe zugrunde, ein Fußgängerschutzsystem für Kraftfahrzeuge zu schaffen, das in ein Frontmodul integrierbar ist und unter der Bedingung kompakter und funktionaler Bauweise einen verbesserten Fußgängerschutz durch Einsatz intelligenter Sensorik gewährleistet, wobei die Kollision mit einem Fußgänger rechtzeitig erkannt wird, so dass der Einsatz der Fußgängerschutzmaßnahmen zeitoptimal erfolgen kann.
Dieses System sollte zudem einfach in der konstruktiven Auslegung sein und die gestellten zukünftigen Anforderungen der Kraftfahrzeughersteller umfassen.

Die Aufgabe wird erfindungsgemäß gelöst durch ein Fußgängerschutzsystem für Kraftfahrzeuge mit den Merkmalen des Anspruchs 1.

Dabei sind Objekts, insbesondere Fußgänger, entlang einer Fahr-/ Vorausstrecke mittels einer optischen und/oder Radar-Sender-Detektoreinheit im Kollisionsfall zu erkennen und das reflektierte optische und/oder Radarempfangssignal zur Abstandsermittlung/-messung und Bilderkennung zu verwenden, wobei das reflektierte Signal einer optischen und/oder Radar-Detektoreinheit zugeführt wird, die im oder hinter dem Stoßfänger integriert verbunden ist und die optischen und/oder Radarreflexionssignale ein das Objekt Fußgänger abbildendes Bild umfassen. Das Detektorsignal wird anschließend über einen Datenausgang der Detektoreinheit via Netzwerk oder Funk in einer elektronischen und optischen objektorientierten Datenbank, die auch eine elektronische und optische Neuro-Fuzzy-strukturierte Datenbank sein kann, zeitgetaktet gespeichert.

Ein nachgeschalteter Bildverarbeitungs- und/oder Mikroprozessor übernimmt aus einer zweiten Datenbank, die ebenfalls eine Neuro-Fuzzy strukturierte Datenbank sein kann, optisch und elektronisch bereits gespeicherte Fußgängerbilddaten, die als Bildklassen von Objekten, insbesondere Fußgängerobjektkonturen hinterlegt sind, so dass ein optischer und elektronischer Bild- und/oder Pixelbildvergleich der gemessenen elektronischen und optischen Detektorsignale mit den gespeicherten Objektbildklassen/Fußgängerobjektbildklassen aus der zweiten Datenbank durch den Bildverarbeitungs- und/oder Mikroprozessor erfolgen kann. Im Falle einer elektronischen und optischen Identifikation eines Fußgängers oder einer Fußgängerkontur durch den Bildverarbeitungs-/ Mikroprozessor, ermittelt ein nachgeschalteter Prognoserechner aus der Abstandsmessung Kraftfahrzeug - Fußgänger und der momentanen Kraftfahrzeuggeschwindigkeit kontinuierlich die zu erwartende Kollisionszeit des Fußgängers und sendet ein elektronisches Signal über ein Bordnetzwerk oder via Funk an eine Aktoreneinheit oder -vorrichtung, die zeitlich durch das Prognoserechnersignal so angesteuert wird, dass der Stoßfängerträger und/oder der Biegeträger mittels eines Rückstellelements aus einer Ausgangslage L entgegen der Fahrzeugbewegungsrichtung um 4 bis 20 cm, d.h. vom Außenhautbereich nach innen Richtung Längsträger zurückverlagert wird. Diese Rückverlagerung des Stoßfängerträgers und/oder Biegeträgers erfolgt in einem Zeitfenster von etwa 100 ms bis zu einer Sekunde vor der eigentlichen vorherberechneten Fußgängerkollision.
Der Vorteil der Verwendung einer elektronischen und optischen objektorientierten bzw. Neuro-Fuzzy-strukturierten Bilddatenbank liegt darin, dass Fußgänger getrennt von gegenständlichen Objekten erkannt, bestimmt und gespeichert werden können. Insbesondere gewährleistet die objektorientierte Bilddatenbank mit elektronisch und optisch hinterlegten Bilddatenklassen von Erwachsenen oder Kindern somit eine zeitlich schnelle und eindeutige Objektklassifizierung/-zuordnung der Detektor- /Messbildausgangsinformation während des elektronischen und optischen Pixelbildvergleichs durch den nachgeordneten Bildverarbeitungs-/Mikroprozessor.

Der dem Bildverarbeitungs-/Mikroprozessor nachgeschaltete Prognoserechner errechnet aus den optischen und/oder Radarempfangssignalen im Falle der Objektklassifizierung Fußgänger dessen Körpergröße und/oder Körpergewicht sowie die Relativgeschwindigkeit und Entfernung Kraftfahrzeug - Fußgänger, verbunden mit der Bestimmung eines wahrscheinlichen Aufprallwinkels für die Fußgänger-Kraftfahrzeug-Aufprallsituation.
Diese Daten werden über ein elektronisches Datennetz des Kraftfahrzeuges oder via Funk vom Bildverarbeitungsprozessor/Mikroprozessor an den Prognoserechner übermittelt.

Der Prognoserechner steuert im Falle der Fußgängererkennung verbunden mit der Abstandsmessung wenigstens eine Aktoreneinheit elektronisch via Datennetzwerk oder per Funk so an, das die wenigstens eine Aktoreneinheit in Wirkverbindung mit einem Rückstellelement stehend, einen Stoßfängerträger und/oder Biegeträger aus seiner Ausgangslage L entgegen der Fahrzeugbewegungsrichtung vom Außenhautbereich nach innen Richtung Längsträger verlagert.

Gemäß Anspruch 6 besteht das Rückstellelement aus einer oder mehreren Rückstellfedern, die den Stoßfängerträger und/oder Biegeträger zeitlich vor der Fußgänger-Kraftfahrzeug-Kollision zurückverlagern. Dabei erfolgt die Aktivierung des Rückstellelements innerhalb eines Zeitfensters, das von dem Prognoserechner ermittelt und vorbestimmt wird. Dadurch wird erreicht, dass die Rückverlagerung des Stoßfängerträgers und/oder Biegeträgers vorteilhaft in einem Zeitfenster von etwa 100 ms bis etwa 1 Sekunde vor dem eigentlichen Fußgängeraufprall erfolgt und somit die getroffenen Maßnahmen den Fußgängerschutz gewährleisten.

In einer weiteren vorteilhaften Ausgestaltung nach Patentanspruch 4 umfasst die wenigstens eine elektronisch oder via Funk ansteuerbare Aktoreneinheit ein pyrotechnisches Element, das in Wirkverbindung mit dem Rückstellelement, insbesondere den Rückstellfedern steht und zeitgesteuert durch den Prognoserechner ausgelöst wird, so dass damit das Rückstellelement den Stoßfängerträger und/oder Biegeträger vor dem Fußgängeraufprallereignis zurückverlagert.

Die Wegstrecke der Rückverlagerung der Stoßfängerträger und/oder Biegeträger erfolgt ausgehend von einer ursprünglichen Ausgangslage L durch das aktivierte Rückstellelement um ca. 4 bis 20 cm entgegen der Fahrtrichtung des Kraftfahrzeuges.

Das Fußgängerschutzsystem für Kraftfahrzeuge ist vorzugsweise, aber nicht ausschließend am Frontmodul des Kraftfahrzeuges angeordnet.

Ein Ausführungsbeispiel der Erfindung ist in der Zeichnung dargestellt und wird nachfolgend näher erläutert.
Es zeigt:

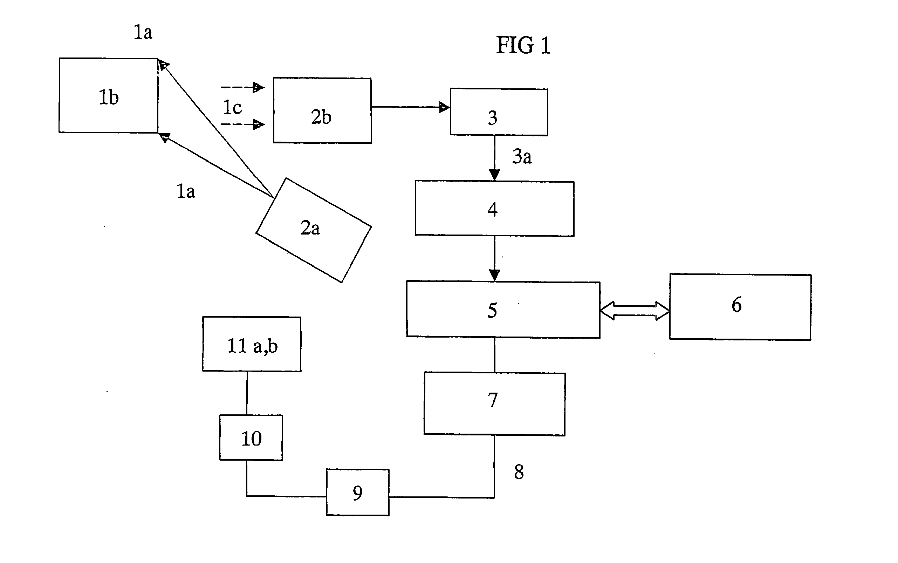

Fig. 1: ein Blockschaltbild des erfindungsgemäßen Fußgängerschutzsystems eines Kraftfahrzeuges in seiner funktionalen Wirkweise

Fig. 1 zeigt als Blockschaltbild den erfindungsgemäßen Aufbau des Fußgängerschutzsystems für Kraftfahrzeuge, wobei entlang einer Fahr-/ Vorausstrecke mittels einer optischen und/oder Radar-Sender-Detektoreinheit 2a,2b (Sende-, Detektoreinheit) durch ausgesendete optische und/oder Radarimpulse 1b Objekte, insbesondere Fußgänger 1a im Kollisionsfall erkannt werden und das von den Objekten/Fußgänger 1a reflektierte optische und/oder Radarempfangssignal 1c zur Abstandsermittlung/-messung und Bilderkennung in der Detektoreinheit 2b erfasst wird. Das von einem Objekt/Fußgänger 1a reflektierte Signal 1c wird somit einer optischen und/oder Radar-Detektoreinheit 2b zugeführt, die im oder hinter dem Stoßfänger integriert ist und elektronisch in Verbindung mit einer nachgeschalteten Mikroprozessor-/ Bildverarbeitungsprozessoreinheit 5 steht. Die optischen und/oder Radarreflexionssignale 1c umfassen ein das Objekt/Fußgänger 1a abbildendes Bild und das Detektorausgangssignal 3 der Detektoreinheit 2b wird als Pixelbild einer elektronischen und optischen objektorientierten Datenbank 4, die auch eine elektronische und optische Neuro-Fuzzy-strukturierte Datenbank sein kann, über ein Netzwerk oder via Funk 3a gesteuert zugeführt. Die nachgeschaltete/-geordnete Mikroprozessor/Bildprozessoreinheit 5 übernimmt die in die Datenbank 4 bereits elektronisch und optisch übertragenen Pixelbilddaten zeitgetaktet für den Vergleich mit Bildklassen von Objekten/Fußgängerobjektkonturen, welche in einer weiteren elektronischen und optischen Objekt/Fußgängerobjektdatenbank 6 abgespeichert und hinterlegt sind, so dass ein elektronischer und optischer Bild- und/oder Pixelvergleich der elektronischen und optischen gemessenen Detektorsignale 3 mit den gespeicherten Objektbildklassen/Fußgängerobjektbildklassen aus der Datenbank 6 innerhalb der Mikroprozessor/Bildprozessoreinheit 5 erfolgen kann. Im Falle der elektronischen und optischen Identifikation einer Fußgängerkontur durch den Mikroprozessor/Bildverarbeitungsprozessor 5, berechnet ein nachgeschalteter Prognoserechner 7 aus der Abstandsmessung Kraftfahrzeug - Fußgänger und der Kraftfahr-zeuggeschwindigkeit die voraussichtliche Kollisionszeit T des Fußgängers 1a und sendet ein elektronisches Signal 8 über das Bordnetzwerk oder via Funk für den Fall der Fußgängerkollision mit dem Kraftfahrzeug.

Dieses Signal 8 steuert eine Aktoreneinheit 9 elektronisch und zeitlich so an, dass der Stoßfängerträger 11a und/oder der Biegeträger 11b mittels des Rückstellelementes 10 aus seiner Ausgangslage L entgegen der Fahrzeugbewegungsrichtung um ca. 4 bis 20 cm vor der von dem Prognoserechner 7 ermittelten Kollisionszeit T mit dem Fußgänger 1a zurückverlagert wird, d.h. vom Außenhautbereich nach innen Richtung Kraftfahrzeuglängsträger. Die Aktoreneinheit 9 kann bspw. ein pyrotechnischen Element sein, wobei das pyrotechnische Element 9 - angesteuert durch das Signal 8 - zur schnellen Auslösung der damit in Wirkverbindung stehenden Rückstellelemente 10, insbesondere Rückstellfedern verwendet wird.

## Patentansprüche

1. Fußgängerschutzsystem für Fahrzeuge, insbesondere Kraftfahrzeuge, mit folgenden Merkmalen:
- Optische und/oder Radarstrahlabtastung einer zu überwachenden Fahr-Norausstrecke mit optischen und/oder Radarimpulsmessstrahlen (1b) einer Sendereinheit (2a),
- Reflexion der optischen und/oder Radarimpulsmessstrahlen von einem Objekt, insbesondere Fußgänger (1a) zur Erzeugung von optischen und/oder Radar-Reflexionssignalen (1c),
- Erfassen der optischen und/oder Radar-Reflexionssignale (1c) mittels einer in oder hinter dem Stoßfänger integrierten optischen und/oder Radar-Detektoreinheit (2b) zur Erzeugung einer Ausgangsinformation,
- Übertragung eines auswertbaren Signals an eine erste vorgesehene Datenbank (4),
- Erkennung von Objekten, insbesondere Fußgängern (1a) entlang der Fahr-/Vorausstrecke, wobei der von den Objekten, insbesondere Fußgängern (1a) reflektierte Messstrahl (1c) einer optischen und/oder Radar-Detektoreinheit (2b) zur Abstandsmessung und Signalerzeugung zugeführt wird, und
- die erzeugten Detektor-Signale (3) der Detektoreinheit (2b) ein abbildendes Objektpixelbild enthalten, und
- die Detektor-Signale (3) via Netzwerk oder Funk (3a) gesteuert in einer ersten elektronischen und optischen objektorientierten Neuro-Fuzzy-strukturierten Bilddatenbank (4) als Pixelbild/Bilddaten ablegt werden, und
- eine Mikroprozessor- und/oder Bildprozessoreinheit (5) einen elektronischen und/oder optischen Vergleich der Pixel - und/oder Bilddaten aus der Bilddatenbank (4) mit den hinterlegten Objektbildklassen/Fußgängerobjektbildklassen aus der Datenbank (6) durchführt, wobei
- eine elektronische und optische Identifikation einer Fußgängerkontur ermittelt wird, und
- nach Identifikation der Fußgängerkontur durch die Mikroprozessor- und/oder Bildprozessoreinheit (5) ein nachgeschalteter Prognoserechner (7) die voraussichtliche Kollisionszeit aus der Abstandsmessung Kraftfahrzeug-Fußgänger und der Kraftfahrzeugzeuggeschwindigkeit ermittelt, und
- der Prognoserechner (7) ein elektronisches Signal (8) via Bordnetzwerk oder Funk an eine Aktoreneinheit (9) sendet, wobei
- die Aktoreneinheit (9) ein Rückstellelement 10 auslöst, und
- das Rückstellelement (10) einen Stoßfängerträger (11a) und/oder Biegeträger (11b) aus der Ausgangslage (L) entgegen der Kraftfahrzeugbewegungsrichtung um etwa 4 bis 20 cm zeitlich vor der von dem Prognoserechner (7) ermittelten Fußgängerkollisionszeit (T) zurückverlagert.

2. Fußgängerschutzsystem nach Anspruch 1, **dadurch gekennzeichnet, dass** der Prognoserechner (7) die Körpergröße und/oder das Körpergewicht eines Fußgängers (1a) aus den Fußgängerkonturdaten, übermittelt durch die Mikroprozessor- und/oder Bildprozessor- einheit (5) bestimmt.

3. Fußgängerschutzsystem nach Anspruch 1, **dadurch gekennzeichnet, dass** der Prognoserechner (7) die Relativgeschwindigkeit und den Aufprallwinkel eines Fußgängers (1a) bestimmt.

4. Fußgängerschutzsystem nach Anspruch 1, **dadurch gekennzeichnet, dass** die Aktoreneinheit (9) ein pyrotechnisches Element ist und in Wirkverbindung mit dem Rückstellelement (10) steht.

5. Fußgängerschutzsystem nach Anspruch 1 und 4, **dadurch gekennzeichnet, dass** das Rückstellelement (10) aus einer oder mehreren Rückstellfedern besteht und den Stoßfängerträger (11a) und/oder Biegeträger (11b) zeitlich vor der Fußgänger-Kraftfahrzeug-Kollision zurückverlagert.

6. Fußgängerschutzsystem nach Anspruch 1 bis 5 , **dadurch gekennzeichnet, dass** ein Auslösen des Fußgängerschutzsystems in einem Zeitfenster von etwa 100 ms bis zu einer Sekunde vor dem Aufprall eines Fußgängers aktiviert wird.

7. Kraftfahrzeug, aufweisend ein Fußgängerschutzsystem gemäß einem der Ansprüche 1 bis 6.

## Claims

1. Pedestrian protection system for vehicles, in particular motor vehicles, having the following features:
- optical and/or radar radiation scanning of a route/route ahead to be monitored with optical and/or radar pulse measuring beams (1b) of a transmitter unit (2a),
- reflection of the optical and/or radar pulse measuring beams from an object, in particular pedestrian (1a), for producing optical and/or radar reflection signals (1c),
- sensing of the optical and/or radar reflection signals (1c) by means of an optical and/or radar detector unit (2b), integrated into or behind the bumper, for producing output information,
- transmission of a signal which can be evaluated to a first database (4) which is provided,
- detection of objects, in particular pedestrians (1a) along the route/route ahead, the measuring beam (1c) which is reflected by the objects, in particular pedestrians (1a), being fed to an optical and/or radar detector unit (2b) for measuring distance and producing signals, and
- the generated detector signals (3) of the detector unit (2b) contain a mapping object pixel image, and
- the detector signals (3) are stored, under the control of a network or radio (3a), in a first electronic and optical, object-oriented neuro-fuzzy-structured image database (4) as pixel image/image data, and
- a microprocessor unit and/or image processor unit (5) carries out an electronic and/or optical comparison of the pixel data and/or image data from the image database (4) with the stored object image classes/pedestrian object image classes from the database (6),
- an electronic and optical identification of a pedestrian contour is determined, and
- after identification of the pedestrian contour by the microprocessor unit and/or image processor unit (5) a predictor computer (7) which is connected downstream determines the anticipated collision time from the measurement of the distance between the motor vehicle and pedestrian and the speed of the motor vehicle, and
- the predictor computer (7) transmits an electronic signal (8) to an actuator unit (9) via an on-board network or radio,
- the actuator unit (9) triggering a resetting element (10), and
- the resetting element (10) moves back a bumper carrier (11a) and/or flexural carrier (11b) from the home position (L) by approximately 4 to 20 cm counter to the direction of movement of the motor vehicle before the pedestrian collision time (T) which is determined by the predictor computer (7).

2. Pedestrian protection system according to Claim 1, **characterized in that** the predictor computer (7) determines the body size and/or the body weight of a pedestrian (1a) from the pedestrian contour data, transmitted by the microprocessor unit and/or image processor unit (5).

3. Pedestrian protection system according to Claim 1, **characterized in that** the predictor computer (7) determines the relative speed and the impact angle of a pedestrian (1a).

4. Pedestrian protection system according to Claim 1, **characterized in that** the actuator unit (9) is a pyrotechnic element and is operatively connected to the resetting element (10).

5. Pedestrian protection system according to Claims 1 and 4, **characterized in that** the resetting element (10) is composed of one or more resetting springs and it moves back the bumper carrier (11a) and/or flexural carrier (11b) before the pedestrian-motor vehicle collision.

6. Pedestrian protection system according to Claims 1 to 5, **characterized in that** the pedestrian protection system is triggered in a time window of approximately 100 ms up to one second before the impact of a pedestrian.

7. Motor vehicle having a pedestrian protection system according to one of Claims 1 to 6.

## Revendications

1. Système de protection des piétons pour véhicules, notamment pour véhicules automobiles, ayant les caractéristiques suivantes :
- Balayage optique et/ou radar d'un trajet de déplacement/avant à surveiller avec des rayons de mesure optiques et/ou à impulsions radar (1b) d'une unité d'émission (2a),
- Réflexion des rayons de mesure optiques et/ou à impulsions radar par un objet, notamment un piéton (1a) en vue de générer des signaux de réflexion optiques et/ou radar (1c),
- Acquisition des signaux de réflexion optiques et/ou radar (1c) au moyen d'une unité de détection optique et/ou radar (2b) intégrée dans ou derrière le pare-chocs en vue de générer une information de sortie,
- Transmission d'un signal interprétable à une première base de données (4) prévue,
- Reconnaissance des objets, notamment des piétons (1a) le long du trajet de déplacement/avant, le rayon de mesure (1c) réfléchi par les objets, notamment les piétons (1a), étant acheminé à une unité de détection optique et/ou radar (2b) en vue de mesurer la distance et de générer un signal, et
- les signaux de détecteur (3) produits par l'unité de détection (2b) contiennent une image en pixels représentant l'objet, et
- les signaux de détecteur (3), commandés par le biais d'un réseau ou de manière radioélectrique (3a), sont stockés sous la forme d'images en pixels / de données d'image dans une première base de données d'image (4) électronique et optique, orientée vers l'objet et structurée en logique floue, et
- une unité à microprocesseur et/ou à processeur d'image (5) effectue une comparaison électronique et/ou optique des données de pixel et/ou d'image provenant de la base de données d'image (4) avec les classes d'image d'objet / classes d'image d'objet piéton enregistrées de la base de données (6),
- une identification électronique et optique d'un contour de piéton étant déterminée, et
- après l'identification du contour de piéton par l'unité à microprocesseur et/ou à processeur d'image (5), un ordinateur de prévision (7) branché à la suite détermine le moment probable de la collision à partir de la mesure de la distance entre le véhicule automobile et le piéton et de la vitesse du véhicule automobile, et
- l'ordinateur de prévision (7) emet un signal électronique (8) par le biais d'un réseau de bord ou de manière radioélectrique à une unité actionneur (9),
- l'unité actionneur (9) déclenchant un élément de rappel (10), et
- l'élément de rappel (10) décale vers l'arrière un support de pare-chocs (11a) et/ou un support de flexion (11b) depuis la position initiale (L) dans le sens inverse du sens de déplacement du véhicule automobile d'environ 4 à 20 cm avant le moment de la collision avec le piéton (T) déterminé par l'ordinateur de prévision (7).

2. Système de protection des piétons selon la revendication 1, **caractérisé en ce que** l'ordinateur de prévision (7) détermine la taille corporelle et/ou le poids corporel d'un piéton (1a) à partir des données de contour du piéton communiquées par l'unité à microprocesseur et/ou à processeur d'image (5).

3. Système de protection des piétons selon la revendication 1, **caractérisé en ce que** l'ordinateur de prévision (7) détermine la vitesse relative et l'angle de collision d'un piéton (1a).

4. Système de protection des piétons selon la revendication 1, **caractérisé en ce que** l'unité actionneur (9) est un élément pyrotechnique et elle est en liaison active avec l'élément de rappel (10).

5. Système de protection des piétons selon les revendications 1 et 4, **caractérisé en ce que** l'élément de rappel (10) se compose d'un ou de plusieurs ressorts de rappel et décale vers l'arrière le support de pare-chocs (11a) et/ou le support de flexion (11b) avant le moment de collision entre le piéton et le véhicule automobile.

6. Système de protection des piétons selon les revendications 1 à 5, **caractérisé en ce que** le déclenchement du système de protection des piétons est activé dans un créneau temporel d'environ 100 ms à 1 seconde avant la collision avec un piéton.

7. Véhicule automobile présentant un système de protection des piétons selon l'une quelconque des revendications 1 à 6.
